# EUROPÄISCHE PATENTSCHRIFT

(11) **EP 3 300 585 B1**
(45) Veröffentlichungstag und Bekanntmachung des Hinweises auf die Patenterteilung: **21.09.2022**
(21) Anmeldenummer: 17001581.2
(22) Anmeldetag: 22.09.2017
(51) Int. Cl.: A01F 15/07

(54) **RUNDBALLENPRESSE ZUM AUFNEHMEN UND PRESSEN VON LANDWIRTSCHAFTLICHEM ERNTEGUT**
ROUND-BALE PRESS FOR HOLDING AND PRESSING AGRICULTURAL PRODUCE
PRESSE À BALLES RONDES PERMETTANT LA RÉCEPTION ET LE PRESSAGE DE LA RÉCOLTE AGRICOLE

(30) Priorität: 28.09.2016 DE 102016011635
(43) Veröffentlichungstag der Anmeldung: 04.04.2018
(73) Patentinhaber: Maschinenfabrik Bernard Krone GmbH & Co. KG, 48480 Spelle (DE)
(72) Erfinder: Sand, Christian, 49509 Recke (DE); Kracht, Katharina, 49809 Lingen (DE); Papen, Michael, 49733 Haren (Ems) (DE)

(56) Entgegenhaltungen:
- EP-A1- 1 595 443
- EP-A1- 1 716 745
- DE-A1- 4 426 034
- US-A- 5 433 059

## Beschreibung

Die Erfindung bezieht sich auf eine Rundballenpresse zum Aufnehmen und Pressen von landwirtschaftlichem Erntegut nach dem Oberbegriff des Patentanspruches 1. Derartige Erntemaschinen sind aus der Praxis in zahlreichen Ausführungsformen bekannt.

Die Druckschrift US 5,433,059 offenbart eine Rundballenpresse nach dem Oberbegriff des Patentanspruchs 1. Bei der Rundballenpresse der Druckschrift EP 1 716 745 A1 wird ein sich zwischen zwei verschwenkbaren Endplatten erstreckender Zuführschnabel zum Zuführen einer Wickelmaterialbahn in einen Pressraum der Rundballenpresse genutzt.

Die DE 44 26 034 A1 zeigt und beschreibt eine Ballenpresse zur Herstellung von Rundballen mit einem Pressraum, der von walzenförmigen Pressmitteln umgrenzt ist. Dem Pressraum nachgelagert, weist die Ballenpresse eine Vorrichtung zu Umwickeln der in dem Pressraum gebildeten Ballen mit einer Hüllbahn auf, die insbesondere aus einer Hüllmaterialrolle, zwei Vortriebswalzen zum Zuführen der Hüllbahn sowie einer Trennvorrichtung zum Abtrennen der Hüllbahn nach dem Umwickelvorgang umfasst. Weiterhin weist die Vorrichtung zum Umwickeln ein Leitelement auf, welches dazu vorgesehen ist, die Hüllbahn beim Start des Umwickelvorganges in einen Zuführspalt zwischen zwei walzenförmigen Pressmitteln einzuführen. Das Leitelement ist dazu als ein plattenförmiges Leitelement ausgebildet, auf dem die Hüllbahn dann im Sinne einer schiefen Ebene in den Zuführspalt zwischen zwei walzenförmigen Presselementen gleiten kann. Eine derartige Ausführungsform ist mit dem Mangel behaftet, dass Bröckelverluste, die zwischen den walzenförmigen Presselementen aus dem Pressraum nach außen gelangen, sich auf dem Leitelement ablagern und damit eine zuverlässige Zuführung der Hüllbahn in den Zuführspalt des Pressraumes unmöglich machen. Weiterhin können unter dem Einfluss von Feuchtigkeit Ernteguthalme auf dem plattenförmigen Leitelement festkleben und damit ebenfalls durch eine erhöhte Reibung die Zuführung der Hüllbahn in den Zuführspalt behindern oder gar unterbinden.

Aufgabe der Erfindung ist es daher, eine Rundballenpresse zum Aufnehmen und Pressen von landwirtschaftlichem Erntegut zu schaffen, bei der die Mängel aus dem Stand der Technik nicht zu Tage treten.

Erfindungsgemäß wird die genannte Aufgabe durch eine Rundballenpresse zum Aufnehmen und Pressen von landwirtschaftlichem Erntegut gemäß Anspruch 1 gelöst. Bevorzugte Ausgestaltungen der Erfindung sind Gegenstand der abhängigen Ansprüche.

Nach der Erfindung wird eine Rundballenpresse zum Aufnehmen und Pressen von landwirtschaftlichem Erntegut, wie Heu, Stroh, Anwelkgut oder dgl. vorgeschlagen, mit einer Ballenkammer zur Formung eines Erntegutballens und mit einer Wickelvorrichtung zur Einfassung des Erntegutballens mit einem Wickelmaterial, wobei die Wickelvorrichtung eine Wickelmaterialrolle, eine das Wickelmaterial transportierende Zuführvorrichtung sowie eine die Wickelmaterialbahn abtrennende Schneidvorrichtung umfasst, mit einer Führung zum Einführen des Wickelmaterials in einen Zuführspalt der Ballenkammer, wobei die Führung zum Einführen des Wickelmaterials in den Zuführspalt der Ballenkammer als ein, in etwa quer zur Laufrichtung des Wickelmaterials ausgerichteter Zuführbalken ausgebildet ist, auf dem eine Anzahl von zueinander beabstandeten Zuführelementen angebracht ist, wobei jedes Zuführelement eine etwa in Laufrichtung der Wickelmaterialbahn gerichtete Führungsfläche aufweist und die Summe der Breiten der Führungsflächen der Zuführelemente nur einer Teilbreite der Breite des Wickelmateriales entspricht.

Die Rundballenpresse zeichnet sich dadurch aus, dass die Zuführvorrichtung der Wickelmaterialbahn einen Zuführschnabel aufweist, der so gestaltet ist, dass die Wickelmaterialbahn zwischen flexiblen Führungsstreifen geführt wird. Diese flexiblen Führungstreifen sind dabei im Hinblick auf die Breite der Wickelmaterialbahn in einem gleichen Abstandsmaß zueinander angeordnet wie die Zuführelemente auf dem Tragbalken. Bei dem Zuführvorgang können also die flexiblen Führungsstreifen mit der dazwischen befindlichen Wickelmaterialbahn auf der Führungsfläche der Schenkel der Zuführelemente entlang gleiten, bis sie auf der Oberfläche der Zuführwalze ankommen, um von dort in den Zuführspalt der Ballenkammer zu gelangen.

Die für die Zuführung des Wickelmateriales in den Zuführspalt der Ballenkammer vorgesehene Führung der Wickelvorrichtung weist damit eine Gestaltung auf, die in vorteilhafter Weise eine Anhäufung von Bröckelverlusten dadurch vermeidet, dass durch die Anordnung der Zuführelemente in einem hinreichenden Abstand zueinander auf einem quer zur Laufrichtung der Wickelmaterialbahn gerichteten, ortsfesten Tragbalken wird erfindungsgemäß eine Wickelvorrichtung für eine Rundballenpresse bereit gestellt, bei der zur Zuführung des Wickelmaterial zwar eine schiefe Ebene geschaffen, die jedoch keine Barriere für herabfallendes bröckliges Erntegut darstellt. Eventuell im Bereich der Wickelvorrichtung auftretendes bröckeliges Erntegut kann bei dieser vorteilhaften Ausführungsform nach unten aus dem Bereich der Wickelvorrichtung herausfallen und stellt somit keine Gefahr für Blockaden bei der Zuführung des Wickelmaterials in den Zuführspalt der Ballenkammer mehr dar. Die Durchführung störungsfreier Wickelprozesse ist damit gesichert.

Das Ankleben von Ernteguthalmen oder bröckligem Erntegut an den im Sinne einer schiefen Ebene wirkenden, flächenförmigen Zuführungen unter Flüssigkeitseinflüssen wie Tau oder hoher Luftfeuchtigkeit ist damit ausgeschlossen. Ein bügelförmig gestaltetes Zuführelement nach der Erfindung bietet kaum Möglichkeiten, dass an den Führungsflächen mit ihrer geringen Breite Erntegutteile anhaften oder festkleben.

Eine detaillierte Beschreibung des Gegenstandes der Erfindung erfolgt nun anhand eines Ausführungsbeispiels.

In der Zeichnung zeigt:
- **Fig. 1:**: eine schematische Seitenansicht einer erfindungsgemäßen Rundballenpresse;
- **Fig. 2:**: eine schematische Seitenansicht der Wickeleinrichtung der erfindungsgemäßen Rundballenpresse nach Fig.1 mit einer Zuführeinrichtung, die in der Grundstellung dargestellt ist;
- **Fig. 3:**: eine schematische Seitenansicht der Wickeleinrichtung der erfindungsgemäßen Rundballenpresse nach Fig.1 mit einer Zuführeinrichtung, die in einer Stellung nahe der Zuführposition dargestellt ist;
- **Fig. 4:**: eine abgebrochene, perspektivische Darstellung der Wickelvorrichtung mit einem Teilbereich der Zuführeinrichtung in einer Blickrichtung entgegen der Fahrtrichtung F;

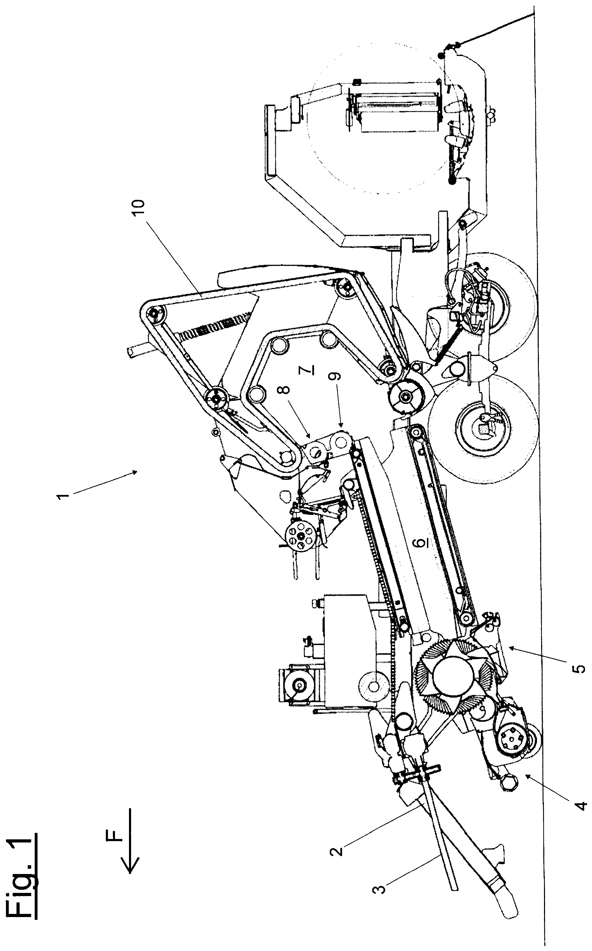

Eine Ausführungsform einer erfindungsgemäßen Maschine 1 zum Aufnehmen und Pressen von landwirtschaftlichem Erntegut in der Art einer Rundballenpresse mit einer nachgeschalteten Einheit zum vollständigen Umhüllen ist in der Fig. 1 näher veranschaulicht. Bei der hier dargestellten Rundballenpresse handelt es sich um eine Ausführungsform, die kontinuierlich arbeitend ausgeführt ist. Das bedeutet, dass diese Rundballenpresse zur Einfassung des fertig gepressten Ballens mit einem Wickelmaterial in der Art von Netz oder Folie nicht mehr anhalten muss. Die Erfindung kann aber ebenso an Rundballenpressen eingesetzt werden, die zur Einfassung des fertig gepressten Rundballens anhalten müssen und erst nach dem Auswurf des eingewickelten Rundballens ihre Fahrt über das abzuerntende Feld fortsetzen können.

Zur Anhängung an eine landwirtschaftliche Zug- und Antriebsmaschine in der Art eines Traktors umfasst die Maschine 1 eine Deichsel 2, so dass die Maschine 1 im Betrieb vom Traktor gezogen und über eine Gelenkwelle 3 mit Antriebsenergie versorgt wird. Das Erntegut wird dabei von einer Aufnahmeeinrichtung 4 aufgenommen und an eine Förder- und Schneideinrichtung 5 weitergefördert, bevor es in einen Speicher 6 gelangt. Dieser Speicher 6 dient dazu, das während des Umwickelvorganges eines fertig gepressten Rundballens vom Feldboden aufgenommene Erntegut solange zwischen zu speichern, bis der Umwickelvorgang sowie der Auswurf des fertigen Rundballens abgeschlossen ist. An den Speicher 6 schließt sich die Ballenkammer 7 an, in der das vom Feldboden aufgenommene Erntegut zu einem Rundballen verdichtet wird. Als Presselemente sind hierbei zwei Presswalzen 8,9 vorgesehen, die mit einer aus Stäben und Riemen gebildeten Ballenformeinrichtung 10 die Ballenkammer 7 umgrenzen und dabei die Verdichtung des landwirtschaftlichen Erntegutes bewirken. Als Umgrenzung der Ballenkammer 7 sind aber auch weitere Presswalzen, Stabkettenböden, Endlosriemen oder Kombinationen daraus denkbar.

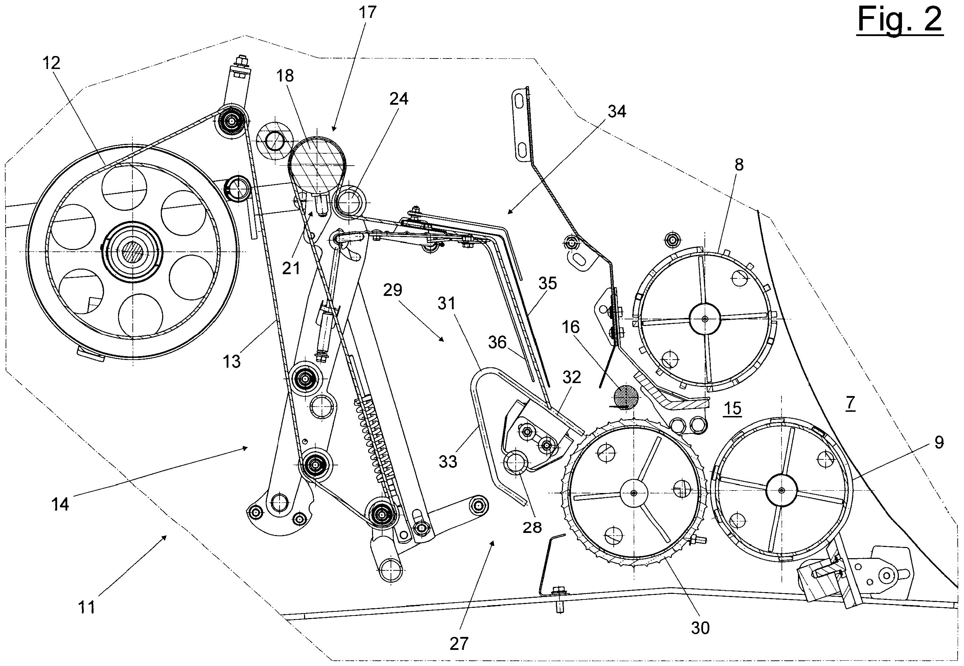

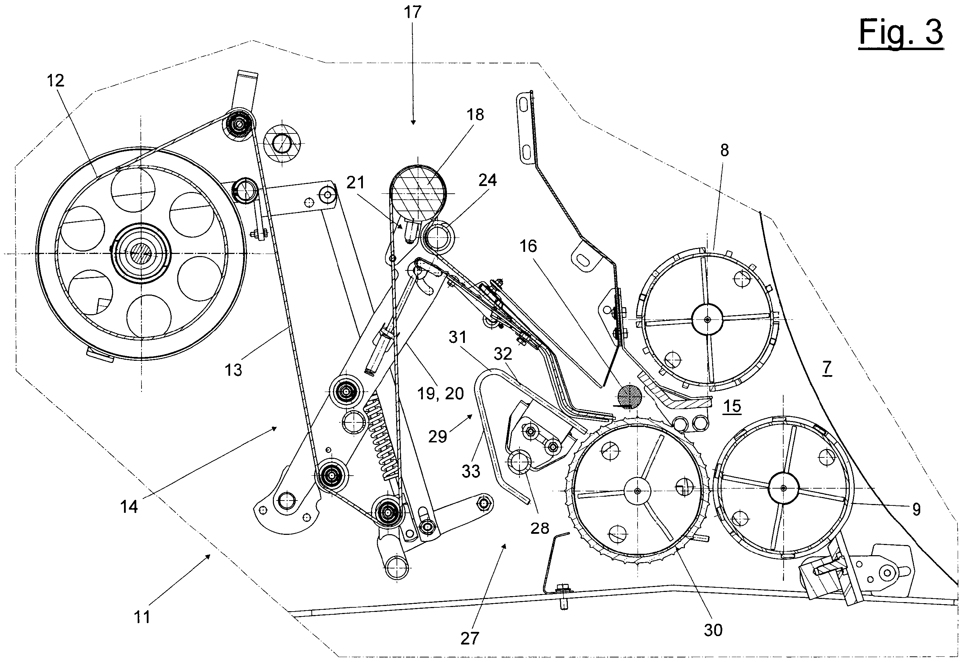

Zur Einfassung des fertig gepressten Rundballens mit Wickelmaterial ist die Maschine 1 mit einer Wickelvorrichtung 11 ausgerüstet, wie dies in Fig. 2 und Fig. 3 näher dargestellt ist. Die Wickelvorrichtung 11 ist dazu mit einer Wickelmaterialrolle 12 als Vorratsrolle für das Wickelmaterial versehen, von der eine Wickelmaterialbahn 13 über eine Zuführvorrichtung 14 einem Zuführspalt 15 der Ballenkammer 7 zugeführt wird. Nach dem Umwickelvorgang eines Rundballens ist es erforderlich, die Wickelmaterialbahn 13 abzutrennen, so dass der fertige Rundballen dann aus der Ballenkammer 7 ausgeworfen werden kann. Dazu ist der Wickelvorrichtung 11 eine Schneidvorrichtung 16 zugeordnet, die sich in einem Bereich nahe dem Zuführspalt 15 der Ballenkammer 7 befindet und zum Abtrennen der Wickelmaterialbahn 13 durch eine Drehbewegung um ihre Längsachse kurzzeitig in die Bewegungsbahn der Wickelmaterialbahn 13 bewegt wird.

In einer vorteilhaften Ausführungsform ist der Zuführvorrichtung 14 nun eine das Wickelmaterial breitstreckende Einrichtung 17 zugeordnet, die dazu dient, die von der Wickelmaterialrolle 12 abgezogene und sich dabei in ihre Breite zusammenziehende Wickelmaterialbahn 13 vor dem Einlauf in die Ballenkammer 7 auf eine Breite zu bringen, die beim Umwickelvorgang des Rundballens in der Ballenkammer 7 die Oberfläche des Rundballens vollständig sowie ein kleiner Streifen der rechten und linken Stirnseite abgedeckt. Um das zu erreichen, ist es erforderlich, dass die Wickelmaterialbahn 13 im Bereich zwischen der Wickelmaterialrolle 12 und dem Zuführspalt 15 der Ballenkammer 7 deutlich breitgestreckt werden muss. Die dazu erforderlichen Maßnahmen unterscheiden sich bei den Wickelmaterialien Netz und Folie stark voneinander, so dass eine Verwendung einer einheitlichen, das Wickelmaterial breitstreckenden Einrichtung für Netz und Folie nicht zielführend ist. Vorteilhaft besteht daher die das Wickelmaterial breitstreckende Einrichtung 17 aus einer Walze 18, die mit den zwei schwenkbar gelagerten Schwingen 19,20 der Zuführvorrichtung 14 derart verbunden ist, dass zum einen ein frei drehbarer Umlauf der Walze 18 gewährleistet werden und zum anderen die Walze 18 gegen Verdrehung gesichert werden kann.

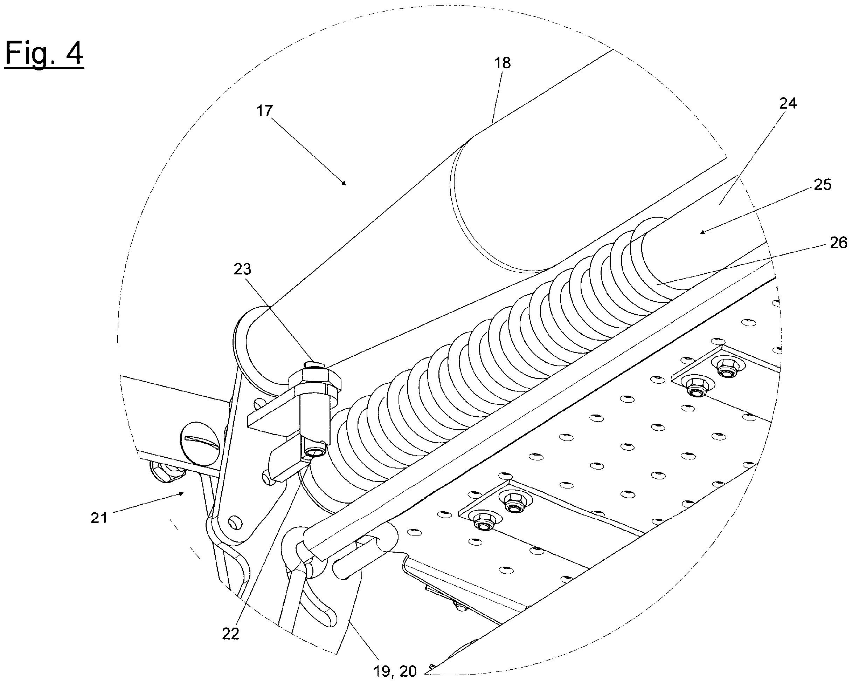

Dazu ist im oberen Bereich zumindest einer der schwenkbaren Schwingen 19,20 eine Verriegelung 21 angebracht, dessen Verriegelungsbolzen 22 mit einer Bohrung 23 der Walze 18 (Fig. 4) in Eingriff gebracht werden kann. In dem beschriebenen Ausführungsbeispiel erfordert die Verriegelung 21 eine mechanische Betätigung. Denkbar ist jedoch ebenso, diese Verriegelung hydraulisch, pneumatisch oder elektrisch zu bedienen.

Weiterhin ist es denkbar, die Betätigung der Verriegelung selbsttätig und damit von einer Steuereinrichtung gesteuert auszuführen. Dazu wird von Messsensoren oder dgl. Messmittel die Art des Wickelmaterials (Netz oder Folie) erfasst, so dass anhand eines derartigen, an eine Steuereinrichtung übermittelten Signals eine automatische Einleitung der Betätigung der Verriegelung erfolgen kann.

In einer vorteilhaften Weiterbildung ist es denkbar, der das Wickelmaterial breitstreckenden Einrichtung 17 in Gestalt der konischen Walze 18 weitere Bauteile zu zuordnen, die insbesondere den Umschlingungswinkel der Wickelmaterialbahn 13 um die konische Walze 18 vergrößern. Beispielsweise kann das ein verdrehfest mit den Schwingen 19,20 der Zuführvorrichtung 14 verbundener Umlenkbalken sein, der der konischen Walze 18 in Laufrichtung der Wickelmaterialbahn 13 vor- oder nachgeordnet sein kann. Zur Vergrößerung des Umschlingungswinkels der Wickelmaterialbahn 13 um die konische Walze 18 kann aber auch ebenso im oberen Bereich der Schwingen 19,20 eine drehbar gelagerte Umlenkrolle 24 angebracht sein, die in ihren äußeren Endbereichen jeweils mit einer Profilierung 25 versehen ist. Die Profilierung 25 ist vorteilhaft als Schneckengang 26 (Fig. 4) ausgebildet, der im Zusammenwirken mit dem Wickelmaterial einen nach außen gerichteten Bewegungsimpuls erzeugt.

Den Fig. 2 und Fig. 3 ist weiterhin zu entnehmen, dass dem Zuführspalt 15 der Ballenkammer 7 ein Zuführbalken 27 vorgeordnet ist, der aus einem ortsfest an Seitenwänden der als Rundballenpresse ausgeführten Maschine 1 befestigten Tragbalken 28 sowie aus einer Anzahl von zueinander beabstandeten, auf dem Tragbalken 28 angebrachten Zuführelementen 29 besteht. Aus der Ausführungsform nach Fig. 2 und 3 wird deutlich, dass dem zwischen den Presswalzen 8,9 befindlichen Zuführspalt 15 der Ballenkammer 7 eine Zuführwalze 30 vorgelagert ist, die der Förderung des Wickelmaterials in den Zuführspalt 15 dient. Es ist also ersichtlich, dass die als Bügel 31 ausgebildeten Zuführelemente 29 der Zuführwalze 30 derart vorgeordnet sind, dass der längere der Schenkel 32 die Wickelmaterialbahn 13 im Sinne einer schiefen Ebene zentral bis auf die Oberfläche der Zuführwalze 30 führt. Als Führungsfläche des Zuführelementes 29 wird dabei die projizierte Fläche des Schenkels 32 angesehen, der beispielsweise aus einem Stabmaterial mit kreisrunder Querschnittsfläche hergestellt ist. Ein zweiter Schenkel 33 ist in Bezug zum Schenkel 32 so ausgerichtet, dass beide Schenkel 32,33 eine etwa dreieckförmige Kontur ausbilden, wobei beide Schenkel 32,33 in ihrem Kreuzungsbereich einen Rundungsbereich aufweisen. Zur Erzielung einer zuverlässigen Zuführung des Wickelmaterials auf die Oberfläche der Zuführwalze ist dabei der Kreuzungsbereich der Schenkel 32,33 des Bügels 31 so ausgerichtet, dass diese in etwa in eine Richtung zeigt, die der Laufrichtung der Wickelmaterialbahn entgegen gerichtet ist.

Eine besonders zuverlässige Zuführung des Wickelmaterials in den Zuführspalt 15 der Ballenkammer 7 ergibt sich dadurch, wenn die Zuführvorrichtung 14 zur optimalen Führung der Wickelmaterialbahn 13 einen Zuführschnabel 34 aufweist, der so gestaltet ist, dass die Wickelmaterialbahn 13 zwischen flexiblen Führungsstreifen 35,36 geführt wird. Diese flexiblen Führungstreifen 35,36 sind dabei im Hinblick auf die Breite der Wickelmaterialbahn 13 in einem gleichen Abstandsmaß zueinander angeordnet wie die Zuführelemente 29 auf dem Tragbalken 28. Bei dem Zuführvorgang können also die flexiblen Führungsstreifen 35,35 mit der dazwischen befindlichen Wickelmaterialbahn 13 auf der Führungsfläche der Schenkel 32 der Zuführelemente 29 entlang gleiten, bis sie auf der Oberfläche der Zuführwalze 30 ankommen, um von dort in den Zuführspalt 15 der Ballenkammer 7 zu gelangen.

Durch die vorteilhafte Gestaltung des Zuführbalkens 27, die sich durch die Anbringung von einer Anzahl von zueinander beabstandeten Zuführelementen 29 auf dem Tragbalken 28 auszeichnet, werden außerdem die Risiken einer Behinderung des Zuführvorganges des Wickelmaterials in den Zuführspalt 15 der Ballenkammer 7 durch bröckelndes Erntegut, welches beim Einsatz der Rundballenpresse in den Bereich der Wickelvorrichtung 11 gelangen kann, deutlich minimiert. Beispielsweise bei sechs Zuführelementen 29, die mit gleichen Abständen zueinander auf dem Tragbalken 28 auf der Breite einer Wickelmaterialbahn 13 angebracht sind, kann herabfallendes, bröckelndes Erntegut problemlos durch die Lücke zwischen zwei benachbarten Zuführelementen 29 nach unten aus dem Bereich der Wickelvorrichtung 11 herausfallen.

Obwohl in der Beschreibung und in den dazugehörigen Zeichnungen bereits vorteilhafte Ausführungen beschrieben wurden, so sind im Rahmen der Erfindung durchaus weitere Modifikationen vorstellbar. In einer denkbaren Weiterbildung kann es auch vorgesehen sein, dass dem Zuführspalt 15 der Ballenkammer 7 ein Zuführbalken 27 mit den daran angeordneten Zuführelementen 29 direkt zugeordnet ist.

## Patentansprüche

1. Rundballenpresse zum Aufnehmen und Pressen von landwirtschaftlichem Erntegut, wie Heu, Stroh, Anwelkgut oder dgl. mit einer Ballenkammer (7) zur Formung eines Erntegutballens und mit einer Wickelvorrichtung (11) zur Einfassung des Erntegutballens mit einem Wickelmaterial, wobei die Wickelvorrichtung (11) eine Wickelmaterialrolle (12), eine das Wickelmaterial transportierende Zuführvorrichtung (14) sowie eine die Wickelmaterialbahn (13) abtrennende Schneidvorrichtung (16) umfasst, mit einer Führung zum Einführen des Wickelmaterials in einen Zuführspalt (15) der Ballenkammer (7), welche als ein in etwa quer zur Laufrichtung des Wickelmaterials ausgerichteter Zuführbalken (27) ausgebildet ist, auf dem eine Anzahl von zueinander beabstandeten Zuführelementen (29) angebracht ist, wobei jedes Zuführelement (29) eine etwa in Laufrichtung der Wickelmaterialbahn (13) gerichtete Führungsfläche aufweist und die Summe der Breiten der Führungsflächen der Zuführelemente (29) nur einer Teilbreite der Breite des Wickelmateriales entspricht, **dadurch gekennzeichnet, dass** die Zuführvorrichtung (14) einen Zuführschnabel (34) aufweist, der so gestaltet ist, dass die Wickelmaterialbahn (13) zwischen flexiblen Führungsstreifen (35,36) geführt wird und diese flexiblen Führungstreifen (35,36) dabei im Hinblick auf die Breite der Wickelmaterialbahn (13) in einem gleichen Abstandsmaß zueinander angeordnet sind wie die Zuführelemente (29) auf dem Tragbalken (28).

2. Rundballenpresse nach Anspruch 1, **dadurch gekennzeichnet, dass** die Führungsflächen der auf einem Zuführbalken (27) angebrachten Zuführelemente (29) im Sinne einer schiefen Ebene auf den Zuführspalt (15) der Ballenkammer (7) ausgerichtet sind.

3. Rundballenpresse nach Anspruch 1, **dadurch gekennzeichnet, dass** die Führungsflächen der auf dem Zuführbalken (27) angebrachten Zuführelemente (29) im Sinne einer schiefen Ebene auf eine, dem Zuführspalt (15) der Ballenkammer (7) vorgelagerten Zuführwalze (30) ausgerichtet sind.

4. Rundballenpresse nach einem der Ansprüche 1 bis 3, **dadurch gekennzeichnet, dass** die Führungsflächen der auf dem Zuführbalken (27) angebrachten Zuführelemente (29) im Hinblick auf die Winkelstellung der schiefen Ebene einstellbar sind.

5. Rundballenpresse nach einem der Ansprüche 1 bis 4, **dadurch gekennzeichnet, dass** die auf dem Zuführbalken (27) angebrachten Zuführelemente (29) aus einem Bügel (31) gebildet sind, der eine etwa dreieckförmige Kontur aufweist, wobei die beiden Schenkel (32,33) des Bügels (31) in einem abgerundeten Kreuzungsbereich auslaufen, der in etwa in eine Richtung zeigt, die der Laufrichtung der Wickelmaterialbahn (13) entgegen gerichtet ist.

6. Rundballenpresse nach Anspruch 5, **dadurch gekennzeichnet, dass** die Bügel (31) mit der etwa dreieckförmigen Kontur aus einem Stabmaterial mit kreisrunder Querschnittsfläche bestehen.

7. Rundballenpresse nach einem der Ansprüche 1 bis 5, **dadurch gekennzeichnet, dass** die auf dem Zuführbalken (27) angebrachten Zuführelemente (29) Blechsegmente mit der in etwa dreieckförmigen Kontur umfassen.

8. Rundballenpresse nach einem der Ansprüche 1 bis 7, **dadurch gekennzeichnet, dass** die auf dem Zuführbalken (27) angebrachten Zuführelemente (29) an einem quer zur Laufrichtung des Wickelmaterials ausgerichteten Tragbalken (28) in gleichmäßigen Abständen zueinander angebracht sind.

## Claims

1. Round baler for picking up and pressing agricultural crops, such as hay, straw, wilted crops or the like, comprising a bale chamber (7) for forming a crop bale and comprising a wrapping device (11) for enclosing the crop bale with a wrapping material, the wrapping device (11) having a wrapping material roll (12), a feed device (14) which transports the wrapping material, and a cutting device (16) which separates the wrapping material web (13), comprising a guide for introducing the wrapping material into a feed gap (15) of the bale chamber (7), which guide is designed as a feed beam (27) which is oriented approximately transversely to the running direction of the wrapping material and on which a number of mutually spaced feed elements (29) are mounted, each feed element (29) having a guide surface directed approximately in the running direction of the wrapping material web (13) and the sum of the widths of the guide surfaces of the feed elements (29) corresponding only to a partial width of the width of the wrapping material, **characterised in that** the feed device (14) has a feed spout (34) which is designed in such a way that the wrapping material web (13) is guided between flexible guide strips (35, 36) and these flexible guide strips (35, 36) are arranged, with regard to the width of the wrapping material web (13), at the same distance from one another as the feed elements (29) on the support beam (28).

2. Round baler according to claim 1, **characterised in that** the guide surfaces of the feed elements (29) mounted on a feed beam (27) are aligned in the sense of an inclined plane with the feed gap (15) of the bale chamber (7).

3. Round baler according to claim 1, **characterised in that** the guide surfaces of the feed elements (29) mounted on the feed beam (27) are aligned in the sense of an inclined plane with a feed roller (30) arranged upstream of the feed gap (15) of the bale chamber (7).

4. Round baler according to any of claims 1 to 3, **characterised in that** the guide surfaces of the feed elements (29) mounted on the feed beam (27) can be adjusted with regard to the angular position of the inclined plane.

5. Round baler according to any of claims 1 to 4, **characterised in that** the feed elements (29) mounted on the feed beam (27) are formed by a bracket (31) which has an approximately triangular contour, the two legs (32, 33) of the bracket (31) terminating in a rounded crossing region which points approximately in a direction opposite to the running direction of the wrapping material web (13).

6. Round baler according to claim 5, **characterised in that** the brackets (31) having the approximately triangular contour consist of a rod material having a circular cross-sectional area.

7. Round baler according to any of claims 1 to 5, **characterised in that** the feed elements (29) mounted on the feed beam (27) comprise sheet-metal segments having the approximately triangular contour.

8. Round baler according to any of claims 1 to 7, **characterised in that** the feed elements (29) mounted on the feed beam (27) are mounted at the same distance from one another on a support beam (28) oriented transversely to the running direction of the wrapping material.

## Revendications

1. Presse à balles rondes pour recevoir et presser des produits agricoles récoltés tels que foin, paille, produits séchés ou analogues comprenant une chambre à balle (7) pour former une balle de produits récoltés et un dispositif d'enrubannage (11) pour entourer la balle avec un film d'enrubannage,
le dispositif d'enrubannage (11) comportant une bobine de film d'enrubannage (12), un dispositif d'alimentation (14) qui transporte le fim d'enrubannage ainsi qu'un dispositif de coupe (16) pour couper la bande de film d'enrubannage (13), un guidage pour introduire le film d'enrubannage dans l'intervalle d'alimentation (15) de la chambre à balle (7) qui est sous la forme d'une poutre d'alimentation (27) orientée sensiblement transversalement à la direction de défilement du film d'enrubannage et porte un ensemble d'éléments d'alimentation (29) écartés les uns des autres,
- chacun des éléments d'alimentation (29) ayant une surface de guidage orientée sensiblement dans la direction de circulation de la bande de film d'enrubannage (13), la somme des largeurs des surfaces de guidage des éléments d'alimentation (29) correspondant seulement à une fraction de la largeur du film d'enrubannage,
presse **caractérisée en ce que**
le dispositif d'alimentation (14) comporte un bec d'alimentation (34) conçu pour guider la bande de film d'enrubannage (13) entre des bandes de guidage (35, 36) flexibles, ces bandes de guidage flexibles (35, 36) étant installées par rapport à la largeur du film d'enrubannage (13) à intervalles réguliers les unes par rapport aux autres, égaux à celui des éléments d'alimentations (29) sur la poutre de support (28).

2. Presse à balles selon la revendication 1,
**caractérisée en ce que**
les surfaces de guidage des éléments d'alimentation (29) installés sur la poutre d'alimentation (27) sont orientées selon un plan incliné vers l'intervalle d'alimentation (15) de la chambre à balle (7).

3. Presse à balles selon la revendication 1,
**caractérisée en ce que**
les surfaces de guidage des éléments d'alimentation (29) installés sur la poutre d'alimentation (27) sont orientées selon un plan incliné vers un cylindre d'alimentation (30) en amont de la fente d'alimentation (15) de la chambre à balle (7).

4. Presse à balles selon l'une des revendications 1 à 3,
**caractérisée en ce que**
les surfaces de guidage des éléments d'alimentation (29) installés sur la poutre d'alimentation (27) ont une position angulaire réglable par rapport au plan incliné.

5. Presse à balles selon l'une des revendications 1 à 4,
**caractérisée en ce que**
les éléments d'alimentation (29) installés sur la poutre d'alimentation (27) sont constitués par un étrier (31) à contour sensiblement triangulaire, les deux branches (32, 33) de l'étrier (31) se terminant par une zone de croisement arrondie qui est sensiblement orientée dans une direction opposée à la direction de circulation du film d'enrubannage (13).

6. Presse à balles selon la revendication 5,
**caractérisée en ce que**
les étriers (31) ayant un contour sensiblement triangulaire sont réalisés avec un produit en forme de tige de section circulaire.

7. Presse à balles selon l'une des revendications 1 à 5,
**caractérisée en ce que**
les éléments d'alimentation (29) installés sur la poutre d'alimentation (27) sont des segments de tôle ayant un contour de forme sensiblement triangulaire.

8. Presse à balles selon l'une des revendications 1 à 7,
**caractérisée en ce que**
les éléments d'alimentation (29) installés sur la poutre d'alimentation (27) sont montés sur une poutre de support (28) orientée transversalement à la direction de circulation du film d'enrubannage, à intervalles réguliers les uns des autres.
